Europäisches Patentamt

(19) European Patent Office

Office européen des brevets

(11) **EP 0 811 718 A1**

(12) **EUROPEAN PATENT APPLICATION**
published in accordance with Art. 158(3) EPC

(43) Date of publication:
10.12.1997 Bulletin 1997/50

(51) Int. Cl.$^6$: **D06M 14/04**, D06M 13/127

(21) Application number: 95940463.3

(86) International application number:
PCT/JP95/02597

(22) Date of filing: 18.12.1995

(87) International publication number:
WO 97/22745 (26.06.1997 Gazette 1997/27)

(84) Designated Contracting States:
DE FR GB IT

(71) Applicant:
TORAY INDUSTRIES, INC.
Tokyo 103 (JP)

(72) Inventors:
• OKUTANI, Shinichi
Otsu-shi, Shiga 520 (JP)
• OTA, Yumi
Oumihachiman-shi, Shiga 523 (JP)

• IKEYAMA, Masami
Yokaichi-shi, Shiga 527 (JP)
• AMANO, Jiro
Takatsuki-shi, Osaka 569-11 (JP)

(74) Representative:
Coleiro, Raymond et al
MEWBURN ELLIS
York House
23 Kingsway
London WC2B 6HP (GB)

(54) **WOVEN OR KNITTED GOODS AND PROCESS FOR PRODUCTION THEREOF**

(57) An object of the present invention is to provide a woven/knitted fabric having excellent hygroscopicity and exhibiting wearing comfort, and the present invention relates to a woven/knitted fabric including cellulose fibers in which hydrophilic vinyl monomers are graft-polymerized. Another object is to provide a woven/knitted fabric exhibiting satisfactory shape memory, and the present invention relates to a woven/knitted fabric including cellulose fibers in which hydrophilic vinyl monomers are graft-polymerized and having a percentage of laundry shrinkage of 2 % or lower. The present invention relates to a woven/knitted fabric including polyester fibers and cellulose fibers to cause the woven/knitted fabric to have shrink resistant.

The present invention relates to a process of performing a graft-polymerization process in which a woven/knitted fabric including cellulose fibers is subjected to an impregnation process using water solution containing hydrophilic vinyl monomers and a polymerization initiator, and then the woven/knitted fabric is subjected to heat treatment and then the woven/knitted fabric is washed. The present invention relates to a process in which the cellulose fibers are crosslinked before, after or simultaneously with performing the graft-polymerization process to cause the woven/knitted fabric to have shape memory.

## Description

### Technical Field

The present invention relates to a woven/knitted fabric having excellent hygroscopicity and exhibiting satisfactory wearing comfort, and to a production process therefor.

The present invention as well as relates to a woven/knitted fabric having excellent hygroscopicity and excellent shrink resistant and shape memory, and to a production process therefor.

Note that the "woven/knitted fabric" in the present invention is a generic term of woven fabrics and knitted fabrics.

### Background Art

Clothes, such as dress shirts, underwear and sports wear, which directly come in contact with the human body or for use in exercise, must attain comfort when it is worn. In particular, the hygroscopicity is an important factor that determines the comfort.

Although a dress shirt, underwear and sports wear made of, for example, cotton or hemp which is composed of cellulose fibers by 100 %, exhibit excellent hygroscopicity, there arises a desire for further improving the comfort. However, the conventional dress shirt or the like composed of cellulose fibers by 100 % cannot satisfy the foregoing requirement.

Moreover, the clothes composed of cellulose fibers by 100 % have problems that they can easily be wrinkled and shrinks easily after washed. Thus, a variety of improvements have been intended. There has been disclosed in, for example, Japanese Patent Laid-Open No. 6-346370 (1994), a method using a gas-phase formaldehyde to crosslink cellulose, and another method has been disclosed in Japanese Patent Laid-Open No. 7-207578 (1995) in which cellulose is resin-treated with fiber reactant type resin.

Although the shrink resistant can be improved due to the foregoing treatments, there however arises another problem in that the hygroscopicity deteriorates undesirably.

On the other hand, although polyester fiber suffers from poor hygroscopicity as compared with that of the cellulose fiber, it has shrink resistant and strength characteristics superior to those of the cellulose fiber. Accordingly, the problems of both of the polyester fiber and the cellulose fiber have been overcome by a method in which, for example, the two types of fibers are mix-spun or combined.

The woven/knitted fabric obtained by mix-spinning or mix-texturing has hygroscopicity deteriorated as compared with that of the woven/knitted fabric composed cellulose fibers by 100 % and as well as degraded shrink resistant as compared with that of the woven/knitted fabric composed of polyester fibers by 100 %.

### Disclosure of the Invention

According to one aspect of the present invention, there is provided a woven/knitted fabric comprising cellulose fibers, comprising hydrophilic vinyl monomers graft-polymerized with the cellulose fibers, wherein $\Delta$MR expressed by a value obtained by subtracting hygroscopic coefficient MR1 (%) of the woven/knitted fabric at temperature of 20°C and humidity of 65 % from hygroscopic coefficient MR2 (%) of the woven/knitted fabric at 30°C and humidity of 90 % satisfies the following equation:

$$4 < \Delta MR \leq 14$$

The foregoing woven/knitted fabric has hygroscopicity superior to that of the conventional woven/knitted fabric, composed of cellulose fibers, and exhibits satisfactory wearing comfort.

According to another aspect of the present invention, there is provided a process for producing a woven/knitted fabric, comprising the steps of subjecting a woven/knitted fabric comprising cellulose fibers to an impregnation process using water solution containing hydrophilic vinyl monomers and a polymerization initiator, subjecting the woven/knitted fabric to heat treatment, and washing the woven/knitted fabric.

According to a still another aspect of the present invention, there is provided a woven/knitted fabric comprising cellulose fibers, comprising hydrophilic vinyl monomers graft-polymerized with the cellulose fibers, wherein percentage of laundry shrinkage is 2 % or lower.

The foregoing woven/knitted fabric has hygroscopicity superior to that of the conventional woven/knitted fabric composed of cellulose fibers and exhibits satisfactory shape memory.

According to another aspect of the present invention, there is provided a process of producing a woven/knitted fabric, comprising the step of crosslinking cellulose fibers before, after or simultaneously with performing a graft-polymerization process in which a woven/knitted fabric comprising the cellulose fibers is subjected to an impregnation process using water solution containing hydrophilic vinyl monomers and a polymerization initiator, the woven/knitted fabric is subjected to heat treatment and the woven/knitted fabric is washed.

According to a still further aspect of the present invention, there is provided a woven/knitted fabric comprising polyester fibers and cellulose fibers, comprising hydrophilic vinyl monomers graft-polymerized with the cellulose fibers, wherein $\Delta$MR expressed by a value obtained by subtracting hygroscopic coefficient MR1 (%) of the woven/knitted fabric at temperature of 20°C and humidity of 65 % from hygroscopic coefficient MR2 (%) of the woven/knitted fabric at 30°C and humidity of 90 % satisfies the following equation:

$$0.04 \times (100 - x) < \Delta MR \le 0.14 \times (100 - x)$$

where x is ratio (wt%) of the polyester fiber in the woven/knitted fabric.

The foregoing woven/knitted fabric has excellent hygroscopicity and exhibits satisfactory shrink resistant.

According to another aspect of the present invention, there is provided a process of producing a woven/knitted fabric, comprising the steps of subjecting a woven/knitted fabric including polyester fibers and cellulose fibers to an impregnation process using water solution containing hydrophilic vinyl monomers and a polymerization initiator, subjecting the woven/knitted fabric to heat treatment, and washing the woven/knitted fabric.

According to another aspect of the present invention, there is provided a woven/knitted fabric comprising polyester fibers and cellulose fibers, comprising hydrophilic vinyl monomers graft-polymerized with the cellulose fibers, wherein percentage of laundry shrinkage is 1 % or lower.

The foregoing woven/knitted fabric has excellent hygroscopicity and satisfactory shrink resistant and shape memory.

According to another aspect of the present invention, there is provided a process of producing a woven/knitted fabric, comprising the step of crosslinking cellulose fibers before, after or simultaneously with performing a graft-polymerization process in which a woven/knitted fabric comprising polyester fibers and the cellulose fibers is subjected to an impregnation process using water solution containing hydrophilic vinyl monomers and a polymerization initiator, the woven/knitted fabric is subjected to heat treatment and the woven/knitted fabric is washed.

Best Mode for Carrying Out the Invention

As cellulose fibers according to the present invention, fibers mainly composed of cellulose, for example, cotton, hemp or rayon, are used.

An aspect of the woven/knitted fabric according to the present invention lies in a woven/knitted fabric, such as a woven fabric or a knitted fabric each of which can be obtained by weaving or knitting yarns comprising cellulose fibers, and in which hydrophilic vinyl monomers are graft-polymerized with the cellulose fibers. $\Delta$MR expressed by a value obtained by subtracting hygroscopic coefficient MR1 (%) of the woven/knitted fabric at temperature of 20°C and humidity of 65 % from hygroscopic coefficient MR2 (%) of the woven/knitted fabric at temperature of 30°C and humidity of 90% satisfies the following equation:

$$4 < \Delta MR \le 14$$

Although the woven/knitted fabric comprising the foregoing cellulose fibers may contain fibers except the cellulose fibers, it is preferable that it may substantially be composed of cellulose fibers to satisfactorily use the hygroscopicity and the heat retaining properties of the cellulose fibers.

The hydrophilic vinyl monomer according to the present invention is a monomer having a polymerizable vinyl group in the molecular structure thereof, and as well as containing an acid group of, for example, carboxylic acid or sulfonic acid and/or its salt and a hydrophilic group, such as a hydroxyl group or an amide group.

Specifically, an acrylate monomer, such as acrylic acid, sodium acrylate, aluminum acrylate, zinc acrylate, calcium acrylate or magnesium acrylate; 2-acrylamide-2-methylpropane sulfonic acid; methacrylic acid; allyl alcohol; sodium allyl sulfonate; acryl amide; sodium vinyl sulfonate; sodium metharylsulfonate; or sodium styrene sulfonate may be employed. Any of the foregoing materials may be used individually, or two or more materials may be used together.

Among the foregoing materials, it is preferable that a monomer, such as 2-acrylamide-2-methylpropane sulfonic acid and/or its sodium salt or sodium allylsulfonate, etc., having sulfonic acid and/or its salt in the molecular structure thereof be employed because of its excellent reactivity.

Since the woven/knitted fabric according to the present invention includes cellulose fibers in which the foregoing hydrophilic vinyl monomers are graft-polymerized, excellent hygroscopicity are attained. It is preferable that the hydrophilic vinyl monomers are graft-polymerized in a fiber which composes the cellulose fibers. The graft-polymerization in the fiber improves the durability of the hygroscopicity and does not prevent the handling touch of the woven/knitted fabric. Note that the graft-polymerization in the fiber which composes of the cellulose fibers can be confirmed by, for example, cross section dyeing. The cross section dyeing method is performed as follows: a fiber bundle imbedded with paraffin is cut in a direction perpendicular to the fiber axis so that a section is made. The imbedded section is removed from the paraffin by using an organic solvent or the like and then dyed with an appropriate dye (for example, basic dye), followed by being washed with water. By observing the section with an optical microscope, graft-polymerization to the inside of the fiber can be confirmed.

It is preferable that the reaction ratio of the hydrophilic vinyl monomer with respect to the woven/knitted fabric be 1 wt% or higher and 20 wt% or lower in view of maintaining the handling touch of the woven/knitted fabric and obtaining excellent hygroscopicity. It is further preferable that the ratio be 3 wt% or higher and 17 wt% or lower, and still further preferable that the ratio be 6 wt% or higher and 15 wt% or lower. Note that the reaction ratio used in this description is a ratio (wt%) of the weight of the woven/knitted fabric increased due to the graft-polymerization and it can be calculated such that $100 \times$ [(absolute dry weight of the woven/knitted fabric after graft-polymerized)-(absolute graft-polymerized)-(absolute dry weight of the woven/knitted fabric before graft-polymerized)]/absolute dry weight before graft-polymerized).

In the present invention, hygroscopic coefficient MR1 of the woven/knitted fabric at temperature of 20°C and humidity of 65 % can be considered to be the hygroscopicity of clothes under a standard environment. The hygroscopic coefficient MR2 of the woven/knitted fabric at temperature of 30°C and humidity of 90 % can be considered to be the hygroscopicity of clothes realized after slight exercise.

Since the woven/knitted fabric including the cellulose fibers according to the present invention have excellent hygroscopicity, an equation $4 < \Delta MR \leq 14$ need be satisfied.

Note that $\Delta MR$ of the woven/knitted fabric substantially composed of cellulose fibers in which the hydrophilic vinyl monomers are not graft-polymerized is from 3.6 to 4.

Since the woven/knitted fabric according to the present invention exhibits excellent hygroscopicity, it can preferably be used as clothes, such as dress shirt, underwear and sports wear, which directly come in contact with the human body or which is worn when the quantity of perspiration is large.

The dress shirt above includes, white shirt, semi-shirt, cutter shirt, school shirt, general working shirt, service shirt, shirt blouse, overblouse, T-shirt, knit shirt, open-necked shirt, aloha shirt, polo shirt and the like.

The underwear includes pants, undershirt, shorts, long pants, men's drawers, men's underpants, sanitary shorts, scanty, running shirt, under long pants, slip, chemise, petticoat, camisol, pannier, brassiere, girdle, waist nipper, garter belt, leotard, overall, rompers, woven/knitted fabric for a diaper cover, fabric which directly come in contact with the skin such as slacks and the like.

The sports wear includes track suit trousers, training shirt, athletic wear, jogging wear, warmup, running pants, tennis wear, baseball wear, softball wear, volleyball wear, basketball wear, golf jumper, golf blouson, anorak, snow wear, mountain wear, windbreaker, poncho, ski outer, ski pants, ski trousers, ski piste, woven/knitted fabric for swimsuit for a race, woven/knitted fabric for school swimsuit, woven/knitted fabric for leisure swimming, woven/knitted fabric for beach wear, woven/knitted fabric for marine wear, woven/knitted fabric for wet suit, woven/knitted fabric for fishing wear, woven/knitted fabric for rider wear and the like.

An aspect of a process of producing the woven/knitted fabric according to the present invention will now be described below.

A woven/knitted fabric, such as a woven fabric or a knitted fabric obtained by weaving or knitting yarns composed of cellulose fibers, is graft-polymerized in such a manner that the woven/knitted fabric is subjected to an impregnation process using water solution containing hydrophilic vinyl monomers and a polymerization initiator, and then the woven/knitted fabric is subjected to heat treatment, and then the woven/knitted fabric is washed. Thus, a woven/knitted fabric exhibiting excellent hygroscopicity can be obtained.

As a method of subjecting the woven/knitted fabric including cellulose fibers to the impregnation process using the water solution containing the hydrophilic vinyl monomers and the polymerization initiator, a method for impregnating the woven/knitted fabric for a predetermined time or a padding method may be employed, for example. The impregnation temperature is not limited particularly and therefore it may be performed at room temperature.

In the present invention, the polymerization initiator is preferably a polymerization initiator for use generally in radical polymerization. Specifically, it is preferable to use peroxide, such as ammonium persulfate or dibenzoyl peroxide, azo catalyser, or cerium catalyzer.

The concentration of the hydrophilic vinyl monomers in the water solution containing the hydrophilic vinyl monomers and the polymerization initiator is not limited particularly. In view of efficiently performing reactions, it is preferable that the concentration be 10 wt% or higher and 30 wt% or lower. It is further preferable that the concentration be 13 wt% or higher and 27 wt% or lower, and it is still further preferable that the same is 15 wt% or higher and 25 wt% or lower.

The concentration of the polymerization initiator in the water solution containing the hydrophilic vinyl monomers and the polymerization initiator is not limited particularly. In view of efficiently performing reactions, it is preferable that the concentration be 1 wt% or higher and 5 wt% or lower with respect to the hydrophilic vinyl monomers, more preferable that the same is 2 wt% or higher and 4 wt% or lower.

In view of preventing deterioration in the strength properties of the woven/knitted fabric including the cellulose fibers and to efficiently perform the reactions, it is preferable that the pH of the water solution containing the hydrophilic vinyl monomers and the polymerization initiator be 6 or more and 12 or less, more preferable that the pH be 7 or more and 11 or less.

In the process of producing the woven/knitted fabric according to the present invention, the heat treatment are performed after the impregnation process. The heat treatment is required to perform the graft-polymerization reaction. The heat treatment is not particularly limited and therefore a dry heat treatment or a wet heat treatment may be employed.

The temperature of the heat treatment for performing the graft-polymerized is not limited particularly. In view of efficiently performing reactions, it is preferable that the heat treatment be performed at temperature of 80°C or higher and 200°C or lower. The heat treatment is performed in one step or two or more steps. The time, for which the heat treatment is performed, is determined in consideration of the heat treatment temperature in relation to the graft reaction ratio. It is preferable that the time be 20 seconds or longer and 5 minutes or shorter.

After the heat treatment, washing needs to be performed to remove non-reacted monomers allowed to adhere to the woven/knitted fabric and polymers which are not graft-polymerized to the cellulose. The washing method is not limited particularly and therefore water washing or hot water washing may be employed. In view of improving the washing efficiency, it is preferable that hot water washing be employed.

The thus-obtained woven/knitted fabric has hygroscopicity superior to that of the conventional woven/knitted fabric including cellulose fibers.

Another aspect of the woven/knitted fabric according to the present invention lies in a woven/knitted fabric comprising cellulose fibers to provide a woven/knitted fabric having excellent hygroscopicity and exhibiting satisfactory shape memory, the woven/knitted fabric comprising cellulose fibers, comprising hydrophilic vinyl monomers graft-polymerized with the cellulose fibers, wherein a percentage of laundry shrinkage is 2 % or lower.

If the percentage of laundry shrinkage is higher than 2 %, the shape memory after washed becomes deteriorated. It is further preferable that the percentage of laundry shrinkage be 1 % or lower.

The percentage of laundry shrinkage is a value measured in accordance with JIS L1042 or a value measured by a method according to JIS L1042 but the washing testing machine or the processing conditions is changed to obtain similar value.

The woven/knitted fabric comprising cellulose fibers exhibiting excellent shape memory can be obtained by crosslinking cellulose fibers before, after or simultaneously with performing a graft polymerization process, in which a woven/knitted fabric, such as a woven fabric or a knitted fabric obtained by weaving, knitting, etc., using yarns composed of cellulose fibers, is subjected to the impregnation process using a water solution containing the hydrophilic vinyl monomers and polymerization initiator and it is subjected to the heat treatment before it is washed.

That is, it can be obtained by crosslinking the cellulose fibers before, after or simultaneously with the graft polymerization of the hydrophilic vinyl monomers.

The method of crosslinking the cellulose fibers is not limited particularly. Any one of a method for processing the woven/knitted fabric with fiber reactant type resin or a process of exposing the woven/knitted fabric to formaldehyde vapor and then subjecting to heat treatment in presence of a catalyzer may be used preferably.

The fiber reactant type resin above is any one of dimethylol ethylene urea, dimethylol uron, dimethylol triazone, dimethylol propane urea, dimethylol hydroxyethylene urea or the like.

As the method of processing the woven/knitted fabric with the fiber reactant type resin, water solution of the foregoing resin is supplied to the woven/knitted fabric by padding or the like together with a catalyzer, followed by being subjected to heat treatment. The temperature of the heat treatment is not limited particularly. In view of efficiently performing crosslinking reactions, it is preferable that the temperature be 80°C or higher and 200°C or lower. As the catalyzer, inorganic metal salt, such as magnesium chloride may be employed.

On the other hand, formaldehyde vapor can be obtained by evaporation realized by heating water solution, formaldehyde, paraformaldehyde or the like. It is preferable that the heat treatment, to be performed after the woven/knitted fabric has been exposed to formaldehyde vapor, be performed at 60°C or higher and 160°C or lower in view of efficiently performing crosslinking reactions and securing safety. As the catalyzer for use in this case, an acidic substance, such as sulfuric acid or sulfurous acid, may be employed.

A still further aspect of the woven/knitted fabric according to the present invention lies in a woven/knitted fabric, intended to provide a woven/knitted fabric having excellent hygroscopicity, exhibiting satisfactory shrink resistant, and comprising polyester fibers and cellulose fibers. In the woven/knitted fabric, hydrophilic vinyl monomers are graft-polymerized with the cellulose fibers. Moreover, the woven/knitted fabric has $\Delta MR$ expressed by a value obtained by subtracting hygroscopic coefficient MR1 (%) of the woven/knitted fabric at temperature of 20°C and humidity of 65 % from hygroscopic coefficient MR2 (%) of the woven/knitted fabric at temperature of 30°C and humidity of 90 % satisfying the following equation.

$$0.04 \times (100 - x) < \Delta MR \leq 0.14 \times (100 - x)$$

where x is the ratio (wt%) of polyester fibers in the woven/knitted fabric.

In the present invention, the polyester fiber is fiber such as polyethylene terephthalate, composed of a polyester polymer having fiber forming characteristic. The polyester polymer above includes a copolymer as well as homopolymer.

The woven/knitted fabric of the foregoing aspect is a woven/knitted fabric, such as a woven fabric or a knitted fabric, obtained by weaving or knitting yarns formed by mix-spinning or combining polyester fibers and cellulose fibers. Moreover, hydrophilic vinyl monomers are graft-polymerized with the cellulose fibers.

Since the hydrophilic vinyl monomers are, in the woven/knitted fabric above, graft-polymerized with the cellulose fibers, excellent hygroscopicity can be obtained. On the other hand, the hydrophilic vinyl monomers are not graft-polymerized with the hydrophobic polyester fibers. Thus, the shrink resistant, which is the characteristic of the polyester fiber, can be maintained. It is preferable that the hydrophilic vinyl monomers are graft-polymerized in a fiber which composes the cellulose fibers. Such graft polymerization in the fiber significantly improves the durability of the excellent hygroscopicity, and the handling touch of the woven/knitted fabric cannot be-deteriorated.

The foregoing woven/knitted fabric can be obtained by subjecting a woven/knitted fabric, such as a woven fabric or a knitted fabric, obtained by weaving, knitting, etc., using yarns obtained by mix-spinning or mix-texturing the polyester fibers and cellulose fibers, to an impregnation process using water solution containing hydrophilic vinyl monomers and polymerization initiator; and then subjecting it to heat treatment; and then washing it.

Another aspect of the woven/knitted fabric according to the present invention lies in a woven/knitted fabric intended to provide a woven/knitted fabric having excellent hygroscopicity, exhibiting satisfactory shrink resistant and shape memory and comprising polyester fibers and cellulose fibers. In the woven/knitted fabric, the hydrophilic vinyl monomers are graft-polymerized with the cellulose fibers, and the woven/knitted fabric exhibits a percentage of laundry shrinkage or 1 % or lower.

The woven/knitted fabric above is a woven/knitted fabric, such as a woven fabric or a knitted fabric obtained by weaving or knitting yarns obtained by mix-spinning or mix-texturing the polyester fibers and cellulose fibers. Moreover, the hydrophilic vinyl monomers are graft-polymerized with the cellulose fibers, and the percentage of laundry shrinkage per JIS L1042 is 1 % or lower.

The foregoing woven/knitted fabric need have the percentage of laundry shrinkage in accordance with JIS L1042 of 1 % or lower. If the percentage of laundry shrinkage is higher than 1 %, the shape memory deteriorates. It is preferable that the percentage of laundry shrinkage be 0.5 % or lower.

The foregoing woven/knitted fabric can be obtained by crosslinking cellulose fibers before, after or simultaneously with a graft polymerization process having steps of subjecting a woven/knitted fabric, such as a woven fabric or knitted fabric obtained by weaving, knitting, etc., using yarns obtained by mix-spinning or mix-texturing polyester fibers and cellulose fibers, to an impregnation process using water solution containing the hydrophilic vinyl monomers and polymerization initiator, and then the woven/knitted fabric subjecting it to heat treatment and then the woven/knitted fabric is washed.

Examples

The present invention will now be described further specifically with embodiments. The characteristic values in the examples were obtained by the following methods.

(1) Hygroscopicity

The hygroscopic coefficient was obtained from change in the weight from the absolute weight of the woven/knitted fabric to the weight of the woven/knitted fabric after it had been allowed to stand in an atmosphere that the temperature was 20°C and the humidity was 65 % or that the temperature was 30°C and the humidity was 90 % in thermohygrostat for 24 hours in accordance with the following equation:

$$\text{Hygroscopic Coefficient (\%)} = [(\text{weight of woven/knitted fabric after allowed to stand at constant temperature and humidity}) - (\text{absolute dry weight of woven/knitted fabric})] \times 100$$

By using hygroscopic coefficient MR1 obtained from the foregoing equation and realized under conditions that the temperature was 20°C and humidity was 65 % and hygroscopic coefficient MR2 realized under conditions that the temperature was 30°C and the humidity was 90 %, ΔMR was calculated in accordance with the following equation.

$$\Delta MR = MR2 - MR1$$

(2) Reaction Ratio

The reaction ratio was calculated from the absolute dry weight of the woven/knitted fabric before graft-polymerized and the absolute dry weight of the woven/knitted fabric after it had been graft-polymerized in accordance with the following equation:

Reaction Ratio (%) = 100 × [(absolute dry weight of woven/knitted fabric after graft-polymerized)
- (absolute dry weight of woven/knitted fabric before graft-polymerized)]/
(absolute dry weight of woven/knitted fabric before graft-polymerized)

(3) Comfort

A white shirt was worn in such a manner it directly comes in contact the skin and an organoleptic examination was performed.

(4) Shrinkage Ratio

The shrinkage ratio (%) after washed per JIS L1042 was measured to obtain it.

Example 1

No. 45 count spun yarns composed of cotton by 100 % were used as the warp yarns and weft yarns so as to be woven into a plain weave fabric (warp density 115 yarns/inch and weft yarn density 76 yarns/inch).
One hundred grams of the foregoing woven fabric was subjected to an impregnation process using 1000 g of water solution (adjusted to pH 8) containing 200 g of 2-acrylamide-2-methylpropanesulfonic acid and 6 g of ammonium persulfate. Then, it was subjected to heat treatment at 160°C for 3 minutes. After the heat treatment had been completed, hot water, the temperature of which was 60°C, was used to wash the woven fabric. The reaction ratio of monomers with respect to the woven fabric was 15 %. The woven fabric was used to perform sewing so that a white shirt was obtained. The obtained white shirt had a ΔMR of 14 %. The foregoing white shirt had excellent comfort when worn.

Comparative Example 1

The same process as that according to Example 1 was performed except methyl methacrylate being used in place of 2-acrylamide-2-methylpropanesulfonic acid. The obtained white shirt had a ΔMR of 1.7 %. The white shirt became musty when worn.

Comparative Example 2

The same process as that according to Example 1 was performed except 2-acrylamide-2-methylpropanesulfonic acid and ammonium persulfate being not used.
The obtained white shirt had a ΔMR of 3.6%. The comfort of the white shirt was inferior to that according to Example 1 when worn.

Comparative Example 3

The same process as that according to Example 1 was performed except No. 45 count spun yarns composed of polyester staple fiber (the fiber fineness of 0.17 tex and cut length 40 mm) by 100 % being used to form a plain weave fabric. The obtained white shirt had a ΔMR of 0 %. The obtained white shirt became musty when worn.

Example 2

No. 45 count spun yarns composed of cotton by 100 % were used as warp yarns and weft yarn so as to be woven into a plain weave fabric (the warp density 115 yarns/inch and weft yarn density 76 yarns/inch) was woven.
Ten grams of the foregoing woven fabric was subjected to an impregnation process using 100 g of water solution (adjusted to pH 8) containing 20 g of 2-acrylamide-2-methylpropanesulfonic acid and 0.6 g of ammonium persulfate. Then, it was subjected to heat treatment at 160°C for 3 minutes. After the heat treatment had been completed, hot water, the temperature of which was 60°C, was used for performing washing. The reaction ratio of 2-acrylamide-2-methylpropanesulfonic acid was 14 %. After the graft-polymerization had been performed, water solution containing dimethylol hydroxyethylene urea by 6 % and 6-hydrate magnesium chloride by 2 % serving as a catalyzer was supplied by padding. Then, the woven fabric was subjected to heat treatment at 150°C for 3 minutes so that the cotton fibers were crosslinked.
The obtained woven fabric had a ΔMR of 12 % and a shrinkage ratio of 0.8 %. The foregoing woven fabric had excellent hygroscopicity, satisfactory shrink resistant and significant shape memory.

Example 3

No. 45 count spun yarns composed of cotton fibers by 100 % were used so as to be knitted into a halftricot by a 36 gauge.

Ten grams of the foregoing knitted fabric was subjected to an impregnation process using 100 g of water solution (adjusted to pH 7) containing 20 g of sodium acrylate and 0.4 g of ammonium persulfate. Then, it was subjected to heat treatment at 180°C for 30 seconds. After the heat treatment had been completed, washing was performed by using 80°C hot water. The reaction ratio of the sodium acrylate was 10 %. After the graft-polymerization had been performed, it was, for 5 minutes, exposed to formaldehyde vapor generated from paraformaldehyde in a sealed reacting chamber. Then, sulfur dioxide was introduced into the reacting chamber to subject the cloth, and then it was treated at 140°C for 3 minutes so that crosslinking reactions of the cotton fibers were performed.

The obtained knitted fabric had a ΔMR of 10 % and a shrinkage ratio of 1.5 %. The foregoing woven fabric had excellent hygroscopicity, satisfactory shrink resistant and significant shape memory.

Examples 4 to 7

The same process as that according to Example 2 was performed except the type of the hydrophilic vinyl monomers being changed. The results are shown in Table 1. Each sample had excellent hygroscopicity and shrink resistant and satisfactory shape memory.

Examples 8 to 11

The same process as that according to Example 2 was performed except the pH of the water solution containing the hydrophilic vinyl monomers and the polymerization initiator being changed. The results are shown in Table 2. Each sample had excellent hygroscopicity and shrink resistant and satisfactory shape memory.

Examples 12 to 15

The same process as that according to Example 2 was performed except the concentration of the hydrophilic vinyl monomers in the water solution being changed. The results are shown in Table 3. Each sample had excellent hygroscopicity and shrink resistant and satisfactory shape memory.

Examples 16 to 19

The same process as that according to Example 2 was performed except the concentration of the polymerization initiator with respect to the hydrophilic vinyl monomers being changed. The results are shown in Table 4. Each sample had excellent hygroscopicity and shrink resistant and satisfactory shape memory.

Examples 20 to 23

The same process as that according to Example 2 was performed except the heat treatment temperature in the graft-polymerization process being changed. The results are shown in Table 5. Each sample had excellent hygroscopicity and shrink resistant and satisfactory shape memory.

Examples 24 to 27

The same process as that according to Example 2 was performed except the heat treatment temperature in the crosslinking reactions of the cotton fibers being changed. The results are shown in Table 6. Each sample had excellent hygroscopicity and shrink resistant and satisfactory shape memory.

Examples 28 to 31

The same process as that according to Example 3 was performed except the heat treatment temperature in the crosslinking reactions of the cotton fibers being changed. The results are shown in Table 7. Each sample had excellent hygroscopicity and shrink resistant and satisfactory shape memory.

Example 32

No. 45 count spun yarns composed of cotton fibers by 100 % were used as the warp yarns and weft yarns so as to be woven into a plain weave fabric (warp density 115 yarns/inch and weft yarn density 76 yarns/inch).

Ten grams of the foregoing woven fabric was supplied with water solution containing dimethylol hydroxyethylene urea by 6 % and 6-hydrate magnesium chloride by 2 % by padding. Then, the foregoing woven fabric was subjected heat treatment at 150°C for 3 minutes so that the cotton fibers were crosslinked. After the crosslinking reactions had been completed, the sample was subjected to an impregnation process using 100 g of water solution (adjusted to pH 8) containing 20 g of 2-acrylamide-2-methylpropanesulfonic acid and 0.6 g of ammonium persulfate, followed by being subjected to heat treatment at 160°C for 3 minutes. After the heat treatment had been performed, washing with 60°C hot water was performed. The reaction ratio of the 2-acrylamide-2-methylpropanesulfonic acid was 15 %.

The $\Delta$MR of the obtained woven fabric was 12 % and the shrinkage ratio was 0.9 %. The foregoing woven fabric had excellent hygroscopicity, satisfactory shrink resistant and significant shape memory.

Example 33

No. 45 count spun yarns composed of cotton fibers by 100 % were used as the warp yarns and weft yarns so as to be woven into a plain weave fabric (warp density 115 yarns/inch and weft yarn density 76 yarns/inch).

Ten grams of the foregoing woven fabric was subjected to an impregnation process using 100 g of water solution (adjusted to pH 8) containing 6 g of dimethylol hydroxyethylene urea, 2 g of 6-hydrate magnesium chloride serving as a catalyzer, 15 of 2-acrylamide-2-methylpropanesulfonic acid and 0.6 g of ammonium persulfate. Then, the sample was subjected to heat treatment at 160°C for 3 minutes. After the heat treatment had been performed, washing with 60°C hot water was performed.

The $\Delta$MR of the obtained woven fabric was 11 % and the shrinkage ratio was 1.2 %. The foregoing woven fabric had excellent hygroscopicity, satisfactory shrink resistant and significant shape memory.

Comparative Example 4

The same process as that according to Example 2 was performed except the hydrophilic vinyl monomers and the polymerization initiator being not used. The $\Delta$MR of the obtained woven fabric was 3.4 % and the shrinkage ratio was 0.9 %.

Comparative Example 5

The same process as that according to Example 2 was performed except methyl methacrylate being used in place of the hydrophilic vinyl monomers. The $\Delta$MR of the obtained woven fabric was 3 % and the shrinkage ratio was 1 %.

Example 34

Polyester staple fibers (the fiber fineness of 0.17 tex and cut length 40 mm) and cotton were mix-spun by a usual method (the blending ratio: 50 wt% of polyester and 50 wt% of cotton) so that No.45 count spun yarns were obtained. Then, the foregoing spun yarns were used as the warp yarns and weft yarns so as to be woven into a plain weave fabric (warp density 115 yarns/inch and weft yarn density 76 yarns/inch).

Ten grams of the foregoing woven fabric was subjected to an impregnation process using 100 g of water solution (adjusted to pH 8) containing 20 g of 2-acrylamide-2-methylpropanesulfonic acid and 0.6 g of ammonium persulfate. Then, heat treatment at 160°C for 3 minutes was performed. After the heat treatment had been performed, washing with 60°C hot water was performed.

After the sample was dried, the obtained woven fabric had the reaction ratio of the 2-acrylamide-2-methylpropanesulfonic acid of 8 %, $\Delta$MR of 5 % and a shrinkage ratio of 2 %. The foregoing woven fabric had excellent hygroscopicity equivalent or superior to that of a woven fabric composed of cotton by 100 % and exhibited satisfactory shrink resistant.

Example 35

Polyester staple fibers (the fiber fineness of 0.17 tex and cut length 40 mm) and cotton were mix-spun by a usual method (the blending ratio: 65 wt% of polyester and 35 wt% of cotton) so that No.45 count spun yarns were obtained. Then, the foregoing spun yarns were used so as to be knitted into halftricot by a 36 gauge.

Ten grams of the foregoing knitted fabric was subjected to an impregnation process using 100 g of water solution (adjusted to pH 7) containing 20 g of sodium acrylate and 0.4 g of ammonium persulfate. Then, heat treatment at 180°C for 20 seconds was performed. After the heat treatment had been performed, washing with 80°C hot water was performed. The reaction ratio of the sodium acrylate of the obtained knitted fabric was 4 %, the $\Delta$MR was 3 % and the shrinkage ratio was 2 %. The foregoing woven fabric had excellent hygroscopicity and exhibited satisfactory shrink resistant.

Examples 36 to 38

The same process as that according to Example 34 was performed except the mixture ratio of the polyester staple fiber being changed. The results are shown in Table 8. Each sample had excellent hygroscopicity and shrink resistant.

Examples 39 to 42

The same process as that according to Example 34 except the type of the hydrophilic vinyl monomers being changed. The results are shown in Table 9. Each sample had excellent hygroscopicity and shrink resistant.

Examples 43 to 46

The same process as that according to Example 34 was performed except the pH of the water solution containing the hydrophilic vinyl monomers and the polymerization initiator being changed. The results are shown in Table 10. Each sample had excellent hygroscopicity and shrink resistant.

Examples 47 to 50

The same process as that according to Example 34 was performed except the concentration of the hydrophilic vinyl monomers in the water solution being changed. The results are shown in Table 11. Each sample had excellent hygroscopicity and shrink resistant.

Examples 51 to 54

The same process as that according to Example 34 was performed except the concentration of the polymerization initiator with respect to the hydrophilic vinyl monomers being changed. The results are shown in Table 12. Each sample had excellent hygroscopicity and shrink resistant.

Examples 55 to 58

The same process as that according to Example 34 was performed except the heat treatment temperature being changed. The results are shown in Table 13. Each sample had excellent hygroscopicity and shrink resistant.

Comparative Example 6

The same process as that according to Example 34 was performed except methyl methacrylate being used in place of 2-acrylamide-2-methylpropanesulfonic acid. The obtained woven fabric had a reaction ratio of 6 %, $\Delta$MR of 1.5 % and Shrinkage ratio of 2.5 %. The foregoing woven fabric had unsatisfactory hygroscopicity.

Comparative Example 7

The same process as that according to Example 34 was performed except 2-acrylamide-2-methylpropanesulfonic acid and ammonium persulfate being not used. The $\Delta$MR of the obtained woven fabric was 2 % and the shrinkage ratio was 3 %. The foregoing woven fabric had unsatisfactory hygroscopicity.

Example 59

Polyester staple fibers (the fiber fineness of 0.17 tex and cut length 40 mm) and cotton were mix-spun by a usual method (the blending ratio: 50 wt% of polyester and 50 wt% of cotton) so that No.45 count spun yarns were obtained. Then, the foregoing spun yarns were used as the warp yarns and weft yarns so as to be woven into a plain weave fabric (warp density 115 yarns/inch and weft yarn density 76 yarns/inch).

Ten grams of the foregoing woven fabric was subjected to an impregnation process using 100 g of water solution (adjusted to pH 8) containing 20 g of 2-acrylamide-2-methylpropanesulfonic acid and 0.6 g of ammonium persulfate. Then, heat treatment at 160°C for 3 minutes was performed. After the heat treatment had been performed, washing with 60°C hot water was performed. The reaction ratio of the 2-acrylamide-2-methylpropanesulfonic acid was 8 %. After the graft-polymerization had been performed, water solution containing dimethylol hydroxyethylene urea by 6 % and 6-hydrate magnesium chloride serving as a catalyzer by 2 % was supplied by padding. Then, the foregoing woven fabric

10

was subjected to heat treatment at 150°C for 3 minutes so that the cotton fibers were cross linked. The ∆MR of the obtained woven fabric was 4 % and the shrinkage ratio was 0.3 %. The woven fabric had excellent hygroscopicity, satisfactory shrink resistant and significant shape memory.

Example 60

Polyester staple fibers (the fiber fineness of 0.17 tex and cut length 40 mm) and cotton were mix-spun by a usual method (the blending ratio: 65 wt% of polyester and 35 wt% of cotton) so that No.45 count spun yarns were obtained. Then, the foregoing spun yarns were used so as to be knitted into halftricot by a 36 gauge.

Ten grams of the foregoing knitted fabric was subjected to an impregnation process using 100 g of water solution (adjusted to pH 7) containing 20 g of sodium acrylate and 0.4 g of ammonium persulfate. Then, heat treatment at 180°C for 30 seconds was performed. After the heat treatment had been performed, washing with 80°C hot water was performed. The reaction ratio of the sodium acrylate was 4 %. After the graft-polymerization had been performed, it was, for 5 minutes, exposed to formaldehyde vapor generated from paraformaldehyde in a sealed reacting chamber. Then, sulfur dioxide was introduced into the reacting chamber to subject the cloth, and then the cloth was treated at 140°C for 3 minutes so that crosslinking reactions of the cotton fibers were performed.

The obtained knitted fabric had a ∆MR of 2.6 % and a shrinkage ratio of 0.5 %. The foregoing knitted fabric had excellent hygroscopicity, satisfactory shrink resistant and significant shape memory.

Examples 61 to 63

The same process as that according to Example 59 was performed except the blending ratio of the polyester staple fiber being changed. The results are shown in Table 14. Each sample had excellent hygroscopicity and shrink resistant and satisfactory shape memory.

Examples 64 to 67

The same process as that according to Example 59 was performed except the type of the hydrophilic vinyl monomers being changed. The results are shown in Table 15. Each sample had excellent hygroscopicity and shrink resistant and satisfactory shape memory.

Examples 68 to 71

The same process as that according to Example 59 was performed except the pH of the water solution containing the hydrophilic vinyl monomers and the polymerization initiator being changed. The results are shown in Table 16. Each sample had excellent hygroscopicity and shrink resistant and satisfactory shape memory.

Examples 72 to 75

The same process as that according to Example 59 was performed except the concentration of the hydrophilic vinyl monomers in the water solution being changed. The results are shown in Table 17. Each sample had excellent hygroscopicity and shrink resistant and satisfactory shape memory.

Examples 76 to 79

The same process as that according to Example 59 was performed except the concentration of the polymerization initiator with respect to the hydrophilic vinyl monomers being changed. The results are shown in Table 18. Each sample had excellent hygroscopicity and shrink resistant and satisfactory shape memory.

Examples 80 to 83

The same process as that according to Example 59 was performed except the heat treatment temperature in the graft-polymerization process being changed. The results are shown in Table 19. Each sample had excellent hygroscopicity and shrink resistant and satisfactory shape memory.

Examples 84 to 87

The same process as that according to Example 59 was performed except the heat treatment temperature at the crosslinking reactions of the cotton fibers being changed. The results are shown in Table 20. Each sample had excellent hygroscopicity and shrink resistant and satisfactory shape memory.

Examples 88 to 91

The same process as that according to Example 60 was performed except the heat treatment temperature at the crosslinking reactions of the cotton fibers being changed. The results are shown in Table 21. Each sample had excellent hygroscopicity and shrink resistant and satisfactory shape memory.

Example 92

Polyester staple fibers (the fiber fineness of 0.17 tex and cut length 40 mm) and cotton were mix-spun by a usual method (the blending ratio: 50 wt% of polyester and 50 wt% of cotton) so that No.45 count spun yarns were obtained. Then, the foregoing spun yarns were used as the warp yarns and weft yarns so as to be woven into a plain weave fabric (warp density 115 yarns/inch and weft yarn density 76 yarns/inch).

Ten grams of the foregoing woven fabric was supplied with water solution containing dimethylol hydroxyethylene urea by 6 % and 6-hydrate of magnesium chloride serving as a catalyzer by 2 % by padding. Then, the woven fabric was subjected to heat treatment at 150°C for 3 minutes so that the cotton fibers were crosslinked. After the crosslinking reactions had been performed, the sample was subjected to an impregnation process using 100 g of water solution (adjusted to pH 8) containing 20 g of 2-acrylamide-2-methylpropanesulfonic acid and 0.6 g of ammonium persulfate. Then, the sample was subjected to heat treatment at 160°C for 3 minutes. After the heat treatment had been performed, washing with 60°C hot water was performed. The reaction ratio of the 2-acrylamide-2-methylpropanesulfonic acid was 8 %.

The ΔMR of the obtained woven fabric was 4 % and the shrinkage ratio was 0.3 %. The woven fabric had excellent hygroscopicity, satisfactory shrink resistant and significant shape memory.

Example 93

Polyester staple fibers (the fiber fineness of 0.17 tex and cut length 40 mm) and cotton were mix-spun by a usual method (the blending ratio: 50 wt% of polyester and 50 wt% of cotton) so that No.45 count spun yarns were obtained. Then, the foregoing spun yarns were used as the warp yarns and weft yarns so as to be woven into a plain weave fabric (warp density 115 yarns/inch and weft yarn density 76 yarns/inch).

Ten grams of the foregoing woven fabric was subjected to an impregnation process using 100 g of water solution (adjusted to pH 8) containing 6 g of dimethylol hydroxyethylene urea, 2 g of 6-hydrate magnesium chloride serving as a catalyzer, 15 g of 2-acrylamide-2-methylpropanesulfonic acid and 0.6 g ammonium persulfate. Then, the sample was subjected to heat treatment at 160°C for 3 minutes. After the heat treatment had been performed, the sample was washed with 60°C hot water.

The ΔMR of the obtained woven fabric was 3.7 % and the shrinkage ratio was 0.3 %. The woven fabric had excellent hygroscopicity, satisfactory shrink resistant and significant shape memory.

Comparative Example 8

The same process as that according to Example 59 was performed except the hydrophilic vinyl monomers and the polymerization initiator being not used. The ΔMR of the obtained woven fabric was 1.5 % and the shrinkage ratio was 0.4 %. The foregoing woven fabric had unsatisfactory hygroscopicity.

Comparative Example 9

The same process as that according to Example 59 was performed except methyl methacrylate being used in place of the hydrophilic vinyl monomers. The ΔMR of the obtained woven fabric was 1.3 % and the shrinkage ratio was 0.4 %. The foregoing woven fabric had unsatisfactory hygroscopicity.

Industrial Applicability

The woven/knitted fabric including the cellulose fibers according to the present invention can preferably be used in a dress shirt, underwear, sports wear or the like for attaining comfortable feeling when worn.

The woven/knitted fabric including the polyester fibers and cellulose fibers according to the present invention can be used widely in clothes.

According to the process of producing the woven/knitted fabric according to the present invention, the woven/knitted fabric exhibiting excellent hygroscopicity, shrink resistant and shape memory can be provided.

Table 1

|  | hydrophilic vinyl monomers | reaction ratio (%) | ΔMR (%) | shrinkage ratio (%) |
|---|---|---|---|---|
| Example 4 | sodium acrylate | 10 | 7 | 0.8 |
| Example 5 | sodium allyl sulfonate | 12 | 9 | 0.8 |
| Example 6 | allyl alcohol | 7 | 5 | 0.6 |
| Example 7 | acrylamide | 6 | 4.8 | 0.7 |

Table 2

|  | pH | reaction ratio (%) | ΔMR (%) | shrinkage ratio (%) |
|---|---|---|---|---|
| Example 8 | 5 | 10 | 10 | 0.8 |
| Example 9 | 6 | 14 | 12 | 0.8 |
| Example 10 | 12 | 14 | 12 | 0.8 |
| Example 11 | 14 | 10 | 10 | 0.8 |

Table 3

|  | concentration (wt%) | reaction ratio (%) | ΔMR (%) | shrinkage ratio (%) |
|---|---|---|---|---|
| Example 12 | 5 | 9 | 9 | 0.7 |
| Example 13 | 10 | 13 | 11 | 0.8 |
| Example 14 | 30 | 14 | 12 | 0.8 |
| Example 15 | 35 | 10 | 10 | 0.8 |

Table 4

|  | concentration (wt%) | reaction ratio (%) | ΔMR (%) | shrinkage ratio (%) |
|---|---|---|---|---|
| Example 16 | 0.5 | 8 | 9 | 0.7 |
| Example 17 | 1 | 12 | 11 | 0.8 |
| Example 18 | 5 | 14 | 12 | 0.8 |
| Example 19 | 8 | 10 | 10 | 0.8 |

Table 5

|  | temperature (°C) | reaction ratio (%) | ΔMR (%) | shrinkage ratio (%) |
|---|---|---|---|---|
| Example 20 | 70 | 7 | 8 | 0.6 |
| Example 21 | 80 | 12 | 11 | 0.8 |
| Example 22 | 200 | 14 | 12 | 0.8 |
| Example 23 | 210 | 9 | 9 | 0.7 |

Table 6

|  | temperature (°C) | reaction ratio (%) | ΔMR (%) | shrinkage ratio (%) |
|---|---|---|---|---|
| Example 24 | 70 | 14 | 13 | 1.4 |
| Example 25 | 80 | 14 | 12 | 0.8 |
| Example 26 | 200 | 14 | 12 | 0.8 |
| Example 27 | 210 | 14 | 13 | 1.6 |

Table 7

|  | temperature (°C) | reaction ratio (%) | ΔMR (%) | shrinkage ratio (%) |
|---|---|---|---|---|
| Example 28 | 50 | 10 | 11 | 1.9 |
| Example 29 | 60 | 10 | 10 | 1.5 |
| Example 30 | 160 | 10 | 10 | 1.5 |
| Example 31 | 170 | 10 | 11 | 1.8 |

Table 8

|  | blending ratio of polyester fibers (wt%) | reaction ratio (%) | ΔMR (%) | shrinkage ratio (%) |
|---|---|---|---|---|
| Example 36 | 10 | 14 | 12 | 3.5 |
| Example 37 | 30 | 11 | 7 | 2.5 |
| Example 38 | 85 | 2.5 | 2 | 1.2 |

Table 9

|  | hydrophilic vinyl monomers | reaction ratio (%) | ΔMR (%) | shrinkage ratio (%) |
|---|---|---|---|---|
| Example 39 | sodium acrylate | 5 | 3.5 | 2 |
| Example 40 | sodium allyl sulfonate | 6 | 4 | 2 |
| Example 41 | allyl alcohol | 4 | 3 | 1.8 |
| Example 42 | acrylamide | 3 | 2.4 | 1.7 |

Table 10

|  | pH | reaction ratio (%) | ΔMR (%) | shrinkage ratio (%) |
|---|---|---|---|---|
| Example 43 | 5 | 6 | 4 | 2 |
| Example 44 | 6 | 8 | 5 | 2 |
| Example 45 | 12 | 8 | 5 | 2 |
| Example 46 | 14 | 6 | 4 | 2 |

Table 11

|  | concentration (wt%) | reaction ratio (%) | ΔMR (%) | shrinkage ratio (%) |
|---|---|---|---|---|
| Example 47 | 5 | 5 | 3.6 | 2 |
| Example 48 | 10 | 8 | 5 | 2 |
| Example 49 | 30 | 8 | 5 | 2 |
| Example 50 | 35 | 6 | 4.2 | 2 |

Table 12

|  | concentration (wt%) | reaction ratio (%) | ΔMR (%) | shrinkage ratio (%) |
|---|---|---|---|---|
| Example 51 | 0.5 | 4 | 3 | 2 |
| Example 52 | 1 | 8 | 5 | 2 |
| Example 53 | 5 | 8 | 5 | 2 |
| Example 54 | 8 | 6 | 4 | 2 |

Table 13

|  | temperature (°C) | reaction ratio (%) | ΔMR (%) | shrinkage ratio (%) |
|---|---|---|---|---|
| Example 55 | 70 | 3 | 2.5 | 1.8 |
| Example 56 | 80 | 7 | 4.5 | 2 |
| Example 57 | 200 | 8 | 5 | 2 |
| Example 58 | 210 | 5 | 3.5 | 2.2 |

Table 14

|  | blending ratio of polyester fibers (wt%) | reaction ratio (%) | ΔMR (%) | shrinkage ratio (%) |
|---|---|---|---|---|
| Example 61 | 10 | 14 | 11 | 0.5 |
| Example 62 | 30 | 11 | 6 | 0.4 |
| Example 63 | 85 | 2.5 | 1.6 | 0.2 |

Table 15

|  | hydrophilic vinyl monomers | reaction ratio (%) | ΔMR (%) | shrinkage ratio (%) |
|---|---|---|---|---|
| Example 64 | sodium acrylate | 5 | 2.8 | 0.3 |
| Example 65 | sodium allyl sulfonate | 6 | 3.6 | 0.3 |
| Example 66 | allyl alcohol | 4 | 2.6 | 0.3 |
| Example 67 | acrylamide | 3 | 2.2 | 0.4 |

Table 16

|  | pH | reaction ratio (%) | ΔMR (%) | shrinkage ratio (%) |
|---|---|---|---|---|
| Example 68 | 5 | 6 | 3 | 0.3 |
| Example 69 | 6 | 8 | 4 | 0.3 |
| Example 70 | 12 | 8 | 4 | 0.3 |
| Example 71 | 14 | 6 | 3 | 0.3 |

Table 17

|  | concentration (wt%) | reaction ratio (%) | ΔMR (%) | shrinkage ratio (%) |
|---|---|---|---|---|
| Example 72 | 5 | 5 | 2.9 | 0.3 |
| Example 73 | 10 | 8 | 4 | 0.3 |
| Example 74 | 30 | 8 | 4 | 0.3 |
| Example 75 | 35 | 6 | 3.5 | 0.3 |

Table 18

|  | concentration (wt%) | reaction ratio (%) | ΔMR (%) | shrinkage ratio (%) |
|---|---|---|---|---|
| Example 76 | 0.5 | 3 | 2.4 | 0.2 |
| Example 77 | 1 | 8 | 4 | 0.3 |
| Example 78 | 5 | 8 | 4 | 0.3 |
| Example 79 | 8 | 6 | 3 | 0.2 |

Table 19

|  | temperature (°C) | reaction ratio (%) | ΔMR (%) | shrinkage ratio (%) |
|---|---|---|---|---|
| Example 80 | 70 | 3 | 2.1 | 0.2 |
| Example 81 | 80 | 7 | 3.8 | 0.3 |
| Example 82 | 200 | 8 | 4 | 0.3 |
| Example 83 | 210 | 5 | 3 | 0.3 |

Table 20

|  | temperature (°C) | reaction ratio (%) | ΔMR (%) | shrinkage ratio (%) |
|---|---|---|---|---|
| Example 84 | 70 | 8 | 4 | 0.8 |
| Example 85 | 80 | 8 | 4 | 0.3 |
| Example 86 | 200 | 8 | 4 | 0.3 |
| Example 87 | 210 | 8 | 4 | 0.6 |

Table 21

|  | temperature (°C) | reaction ratio (%) | ΔMR (%) | shrinkage ratio (%) |
|---|---|---|---|---|
| Example 88 | 50 | 4 | 2.6 | 1.0 |
| Example 89 | 60 | 4 | 2.6 | 0.5 |
| Example 90 | 160 | 4 | 2.6 | 0.5 |
| Example 91 | 170 | 4 | 2.6 | 0.9 |

## Claims

1. A woven/knitted fabric comprising cellulose fibers, comprising hydrophilic vinyl monomers graft-polymerized with said cellulose fibers, wherein ΔMR expressed by a value obtained by subtracting hygroscopic coefficient MR1 (%) of said woven/knitted fabric at temperature of 20°C and humidity of 65 % from hygroscopic coefficient MR2 (%) of said woven/knitted fabric at 30°C and humidity of 90 % satisfies the following equation:

$$4 < \Delta MR \leq 14$$

2. A woven/knitted fabric according to claim 1, wherein the reaction ratio of said hydrophilic vinyl monomers with respect to said woven/knitted fabric is 1 wt% or higher and 20 wt% or lower.

3. A woven/knitted fabric according to claim 1, wherein said hydrophilic vinyl monomers are vinyl monomers containing sulfonic acid and/or sulfonate.

4. A woven/knitted fabric according to claim 1, wherein said woven/knitted fabric is a dress shirt.

5. A woven/knitted fabric according to claim 1, wherein said woven/knitted fabric is underwear.

6. A woven/knitted fabric according to claim 1, wherein said woven/knitted fabric is sports wear.

7. A woven/knitted fabric according to claim 1, wherein said woven/knitted fabric is composed of cellulose fibers by 100 %.

8. A woven/knitted fabric comprising cellulose fibers, comprising hydrophilic vinyl monomers graft-polymerized with said cellulose fibers, wherein percentage of laundry shrinkage is 2 % or lower.

9. A woven/knitted fabric according to claim 8, wherein ΔMR expressed by a value obtained by subtracting hygroscopic coefficient MR1 (%) of said woven/knitted fabric at temperature of 20°C and humidity of 65 % from hygroscopic coefficient MR2 (%) of said woven/knitted fabric at 30°C and humidity of 90 % satisfies the following equation:

$$4 < \Delta MR \leq 14$$

10. A woven/knitted fabric according to claim 8, wherein said cellulose fibers are crosslinked by fiber reactant type resin and/or formaldehyde.

11. A process of producing a woven/knitted fabric comprising the steps of subjecting a woven/knitted fabric comprising cellulose fibers to an impregnation process using water solution containing hydrophilic vinyl monomers and a polymerization initiator, subjecting said woven/knitted fabric to heat treatment, and washing said woven/knitted fabric.

12. A process of producing a woven/knitted fabric comprising the step of crosslinking cellulose fibers before, after or simultaneously with performing a graft-polymerization process in which a woven/knitted fabric comprising said cellulose fibers is subjected to an impregnation process using water solution containing hydrophilic vinyl monomers and a polymerization initiator, and then the woven/knitted fabric is subjected to heat treatment and then the woven/knitted fabric is washed.

13. A process of producing a woven/knitted fabric according to claim 11 or 12, wherein said hydrophilic vinyl monomers are vinyl monomers containing sulfonic acid and/or sulfonate.

14. A process of producing a woven/knitted fabric according to claim 11 or 12, wherein pH of said water solution is 6 or more and 12 or lower.

15. A process of producing a woven/knitted fabric according to claim 11 or 12, wherein concentration of said hydrophilic vinyl monomers is 10 wt% or higher and 30 wt% or lower.

16. A process of producing a woven/knitted fabric according to claim 11 or 12, wherein said polymerization initiator is contained by 1 wt% or higher and 5 wt% or lower with respect to said hydrophilic vinyl monomers.

17. A process of producing a woven/knitted fabric according to claim 11 or 12, wherein heat treatment temperature is 80°C or higher and 200°C or lower,

18. A process of producing a woven/knitted fabric according to claim 11 or 12, wherein said woven/knitted fabric is substantially composed of cellulose fibers.

19. A process of producing a woven/knitted fabric according to claim 12, wherein said cellulose is subjected to an impregnation process using fiber reactant type resin and to heat treatment so as to be crosslinked.

20. A process of producing a woven/knitted fabric according to claim 19, wherein said heat treatment temperature is 80°C or higher and 200°C or lower.

21. A process of producing a woven/knitted fabric according to claim 12, wherein said cellulose fibers are exposed to formaldehyde vapor and to heat treatment in presence of a catalyzer so as to be crosslinked.

22. A process of producing a woven/knitted fabric according to claim 21, wherein the heat treatment temperature is 60°C or higher and 160°C or lower.

23. A woven/knitted fabric comprising polyester fibers and cellulose fibers comprising hydrophilic vinyl monomers graft-polymerized with said cellulose fibers, wherein ΔMR expressed by a value obtained by subtracting hygroscopic coefficient MR1 (%) of said woven/knitted fabric at temperature of 20°C and humidity of 65 % from hygroscopic coefficient MR2 (%) of said woven/knitted fabric at 30°C and humidity of 90 % satisfies the following equation:

$$0.04 \times (100 - x) < \Delta MR \leq 0.14 \times (100 - x)$$

where x is ratio (wt%) of said polyester fiber in said woven/knitted fabric.

24. A woven/knitted fabric according to claim 23, wherein reaction ratio of said hydrophilic vinyl monomers with respect to said woven/knitted fabric is 1 wt% or higher and 20 wt% or lower.

25. A woven/knitted fabric according to claim 23, wherein said hydrophilic vinyl monomers are vinyl monomers containing sulfonic acid and/or sulfonate.

26. A woven/knitted fabric comprising polyester fibers and cellulose fibers comprising hydrophilic vinyl monomers graft-polymerized with said cellulose fibers, wherein percentage of laundry shrinkage is 1 % or lower.

27. A woven/knitted fabric according to claim 26, wherein ΔMR expressed by a value obtained by subtracting hygroscopic coefficient MR1 (%) of said woven/knitted fabric at temperature of 20°C and humidity of 65 % from hygroscopic coefficient MR2 (%) of said woven/knitted fabric at 30°C and humidity of 90 % satisfies the following equation:

$$0.04 \times (100 - x) < \Delta MR \leq 0.14 \times (100 - x)$$

where x is ratio (wt%) of said polyester fiber in said woven/knitted fabric.

**28.** A woven/knitted fabric according to claim 26, wherein said cellulose fibers are crosslinked with fiber reactant type resin and/or formaldehyde.

**29.** A process of producing a woven/knitted fabric comprising the steps of subjecting a woven/knitted fabric comprising polyester fibers and cellulose fibers to an impregnation process using water solution containing hydrophilic vinyl monomers and a polymerization initiator, subjecting said woven/knitted fabric to heat treatment, and washing said woven/knitted fabric.

**30.** A process of producing a woven/knitted fabric comprising the step of crosslinking cellulose fibers before, after or simultaneously with performing a graft-polymerization process in which a woven/knitted fabric including polyester fibers and said cellulose fibers is subjected to an impregnation process using water solution containing hydrophilic vinyl monomers and a polymerization initiator, and then said woven/knitted fabric is subjected to heat treatment and then said woven/knitted fabric is washed.

**31.** A process of producing a woven/knitted fabric according to claim 29 or 30, wherein said hydrophilic vinyl monomers are vinyl monomers containing sulfonic acid and/or sulfonate.

**32.** A process of producing a woven/knitted fabric according to claim 29 or 30, wherein pH of said water solution is 6 or more and 12 or less.

**33.** A process of producing a woven/knitted fabric according to claim 29 or 30, wherein concentration of said hydrophilic vinyl monomers in said water solution is 10 wt% or higher and 30 wt% or lower.

**34.** A process of producing a woven/knitted fabric according to claim 29 or 30, wherein said polymerization initiator is contained by 1 wt% or higher and 5 wt% or lower with respect to said hydrophilic vinyl monomers.

**35.** A process of producing a woven/knitted fabric according to claim 29 or 30, wherein said heat treatment temperature is 80°C or higher and 200°C or lower.

**36.** A process of producing a woven/knitted fabric according to claim 30, wherein said cellulose is subjected to an impregnation process using fiber reactant type resin and to heat treatment so as to crosslinked.

**37.** A process of producing a woven/knitted fabric according to claim 36, wherein temperature of said heat treatment is 80°C or higher and 200°C or lower.

**38.** A process of producing a woven/knitted fabric according to claim 30, wherein said cellulose fibers are exposed to formaldehyde vapor and to heat treatment in presence of a catalyzer so as to be crosslinked.

**39.** A process of producing a woven/knitted fabric according to claim 38, where temperature of said heat treatment is 60°C or higher and 160°C or lower.

**40.** A woven/knitted fabric according to any one of claims 1, 8, 23 or 26, wherein said hydrophilic vinyl monomers are graft-polymerized in a fiber which composes of said cellulose fibers.

## INTERNATIONAL SEARCH REPORT

| | International application No. |
|---|---|
| | PCT/JP95/02597 |

**A. CLASSIFICATION OF SUBJECT MATTER**

Int. Cl$^6$ D06M14/04, D06M13/127

According to International Patent Classification (IPC) or to both national classification and IPC

**B. FIELDS SEARCHED**

Minimum documentation searched (classification system followed by classification symbols)

Int. Cl$^6$ D06M14/04, 14/22, 13/12-13/13, 15/423

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 48-9018, A (Daido Maruta Senko K.K.), February 5, 1973 (05. 02. 73) (Family: none) | 1, 2, 4-10, 23, 24, 26-28, 40 |
| Y | | 3, 25, 31 |
| X | JP, 42-23152, B1 (Kanebo, Ltd.), November 10, 1967 (10. 11. 67) (Family: none) | 1, 2, 4-12, 14-19, 23, 24, 26-30, 32-36, 40 |
| Y | | 3, 8-10, 13, 20-22, 25-28, 31, 37-39 |
| X | JP, 54-2498, A (Kanebo, Ltd.), January 10, 1979 (10. 01. 79) & US, 4135877, A | 1-7, 23-25, 40 |
| Y | | 3, 8-10, 13, 25-28, |

| [X] | Further documents are listed in the continuation of Box C. | [ ] | See patent family annex. |
|---|---|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| March 4, 1996 (04. 03. 96) | March 26, 1996 (26. 03. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

<table>
<tr><td colspan="2" align="center">**INTERNATIONAL SEARCH REPORT**</td><td>International application No.<br><br>PCT/JP95/02597</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| | | 31 |
| Y | JP, 6-346370, A (Unitika Ltd.),<br>December 20, 1994 (20. 12. 94)(Family: none) | 21, 22,<br>38, 39 |
| Y | JP, 7-207578, A (Sumitomo Chemical Co., Ltd.),<br>August 8, 1995 (08. 08. 95)(Family: none) | 20, 37 |

Form PCT/ISA/210 (continuation of second sheet) (July 1992)